# EUROPÄISCHE PATENTSCHRIFT

(11) **EP 1 744 902 B1**
(45) Veröffentlichungstag und Bekanntmachung des Hinweises auf die Patenterteilung: **04.02.2009**
(21) Anmeldenummer: 05743212.2
(22) Anmeldetag: 29.04.2005
(51) Int. Cl.: B42D 15/00, G02B 5/30

(54) **SICHERHEITSELEMENT UND VERFAHREN ZU SEINER HERSTELLUNG**
SECURITY ELEMENT AND PROCESS FOR PRODUCING THE SAME
ELEMENT DE SECURITE ET PROCEDE DE FABRICATION

(30) Priorität: 30.04.2004 DE 102004021247
(43) Veröffentlichungstag der Anmeldung: 24.01.2007
(73) Patentinhaber: Giesecke & Devrient GmbH, 81677 München (DE)
(72) Erfinder: HOFFMÜLLER, Winfried, 83646 Bad Tölz (DE); BURCHARD, Theodor, 83703 Gmund (DE)
(74) Vertreter: Zeuner & Summerer
(86) Internationale Anmeldenummer: PCT/EP2005/004673
(87) Internationale Veröffentlichungsnummer: WO 2005/105473

(56) Entgegenhaltungen:
- EP-A- 0 899 119
- EP-A- 1 156 934
- WO-A-98/52077
- WO-A-20/04028824
- US-A- 5 678 863
- US-A1- 2003 012 935

## Beschreibung

Die Erfindung betrifft ein Sicherheitselement zur Absicherung von Wertdokumenten mit einer oder mehreren Flüssigkristallschichten. Die Erfindung betrifft ferner ein Verfahren zum Herstellen eines derartigen Sicherheitselements, eine Sicherheitsanordnung, die neben einem solchen Sicherheitselement ein separates Darstellungselement umfasst, sowie ein Wertdokument, das mit einem solchen Sicherheitselement oder einer solchen Sicherheitsanordnung ausgestattet ist.

Wertdokumente werden zur Absicherung oft mit Sicherheitselementen ausgestattet, die eine Überprüfung der Echtheit des Dokuments gestatten und die zugleich als Schutz vor unerlaubter Reproduktion dienen. Dabei kann es sich beispielsweise um ein bedrucktes Sicherheitspapier, eine Ausweiskarte aus Kunststoff oder ein sonstiges, eine Absicherung benötigendes Dokument handeln.

Vielfach werden als Sicherheitselemente optisch variable Elemente eingesetzt, die dem Betrachter unter unterschiedlichen Betrachtungswinkeln einen unterschiedlichen Bildeindruck, beispielsweise einen unterschiedlichen Farbeindruck vermitteln. Aus der Druckschrift EP 0 435 029 A2 ist ein solches Sicherheitselement mit einer kunststoffähnlichen Schicht aus einem Flüssigkristallpolymer bekannt, die bei Zimmertemperatur ein ausgeprägtes Farbwechselspiel zeigt. Die optisch variablen Effekte der Flüssigkristallpolymere lassen sich durch Einfärben beliebiger Schichten mit herkömmlichen Farben kombinieren, wodurch sich Muster erzeugen lassen, die erst beim Verkippen der Sicherheitselemente sichtbar werden. Die Farbstoffe selbst können in einer beliebigen Schicht eingebracht oder als Druckbild aufgebracht sein.

Aus der Druckschrift EP 1156 934 B1 ist ein Sicherheitselement mit einer Flüssigkristallschicht als optisch variablem Material bekannt. Es wird ein Ausführungsbeispiel mit passerhaltiger Anordnung von Druckschichten aus rechtsdrehendem und linksdrehendem flüssigkristallinem Material beschrieben, die bei normaler Beleuchtung das gleiche Erscheinungsbild zeigen, so dass eine durch die Form bzw. den Umriss der Bereiche dargestellte Information nicht erkannt werden kann. Erst bei Betrachtung der Schichten durch einen geeigneten Polarisationsfilter kann die Information durch den Helligkeitsunterschied zwischen den Druckschichten erkannt werden. Um diesen Effekt zu erzielen, ist allerdings eine passergenaue Aufbringung der flüssigkristallinen Schichten erforderlich. EP 0899119 A1 betrifft eine mit dem Auge nicht erkennbare maschinendetektierbare Sicherheitsmarkierung. Ein Beispiel zeigt zwei flüssigkristalline Materialien mit gleicher Farbe und verschiedene Händigkeit der Helixstruktur übereinander, und möglich auf transparenten Untergründen aufgebracht.

Der Farbkippeffekt der Flüssigkristallschichten führt bei den beschriebenen Sicherheitselementen aufgrund der physikalischen Gegebenheiten stets zu einer Verschiebung der reflektierten Lichtwellenlänge vom längerwelligen Bereich zu einem kürzerwelligen Bereich, wenn das Sicherheitselement aus der senkrechten Betrachtungsrichtung heraus verkippt wird. Die Möglichkeiten zur Erzeugung unterschiedlicher Farbkippeffekte sind daher begrenzt. Darüber hinaus wirken die Flüssigkristallschichten nur bei Betrachtung in Reflexion als Sicherheitselement, da der Farbkippeffekt wegen des erforderlichen dunklen oder schwarzen Hintergrunds im Durchlicht nicht beobachtet werden kann.

Ausgehend davon liegt der Erfindung die Aufgabe zugrunde, ein Sicherheitselement der eingangs genannten Art mit hoher Fälschungssicherheit anzugeben, das die Nachteile des Standes der Technik vermeidet.

Diese Aufgabe wird durch das Sicherheitselement mit den Merkmalen des Hauptanspruchs gelöst. Ein Verfahren zu seiner Herstellung, eine Sicherheitsanordnung und ein Wertdokument mit einem solchen Sicherheitselement sind in den nebengeordneten Ansprüchen angegeben. Weiterbildungen der Erfindung sind Gegenstand der Unteransprüche.

Die Erfindung stellt ein Sicherheitselement zur Absicherung von Wertdokumenten bereit, das eine zumindest bereichsweise vorliegende erste lichtpolarisierende Schicht aus einem cholesterischen flüssigkristallinen Material enthält, die Licht mit einer vorbestimmten zirkularen Polarisation selektiv reflektiert, und die in eine erste Reflexionsrichtung Licht eines ersten Wellenlängenbereichs und in eine zweite, unterschiedliche Reflexionsrichtung Licht eines zweiten Wellenlängenbereichs selektiv reflektiert. Das Sicherheitselement enthält weiter eine zumindest bereichsweise vorliegende zweite lichtpolarisierende Schicht, die Licht mit der zur vorbestimmten zirkularen Polarisation gegenläufigen zirkularen Polarisation selektiv reflektiert, und die in die erste bzw. zweite Reflexionsrichtung Licht des ersten bzw. zweiten Wellenlängenbereichs selektiv reflektiert, sowie eine semitransparente Filterschicht, auf der die erste und zweite lichtpolarisierende Schicht übereinander angeordnet sind. Die Filterschicht absorbiert dabei Licht aus dem sichtbaren Spektralbereich zumindest teilweise und transmittiert Licht aus dem ersten und/oder zweiten Wellenlängenbereich.

Durch eine derartige Gestaltung lassen sich neuartige Flüssigkristalleffekte mit erhöhter Fälschungssicherheit erzielen. Wie nachfolgend im Detail erläutert, können durch das Zusammenspiel der semitransparenten Filterschicht mit zwei oder drei aufeinander abgestimmten Flüssigkristallschichten semitransparente Sicherheitselemente mit einem inversen Farbkippeffekt erzeugt werden, bei denen der Farbeindruck des Sicherheitselements beim Kippen aus der Senkrechten, anders als bei üblichen Farbkippelementen, vom kurzwelligen zu einem längerwelligen Farbeindruck wechselt.

In einer ersten vorteilhaften Erfindungsvariante ist die zweite lichtpolarisierende Schicht aus einem cholesterischen flüssigkristallinen Material gebildet, und reflektiert Licht mit der zur vorbestimmten zirkularen Polarisation gegenläufigen zirkularen Polarisation selektiv.

Alternativ kann die zweite lichtpolarisierende Schicht aus zwei Teilschichten gebildet sein, wobei eine erste Teilschicht aus einem cholesterischen flüssigkristallinen Material gebildet ist und Licht mit der vorbestimmten zirkularen Polarisation selektiv reflektiert, und wobei eine zweite Teilschicht, die zwischen der ersten Teilschicht und der ersten lichtpolarisierenden Schicht angeordnet ist, eine λ/2-Schicht bildet. Die λ/2-Schicht ist dabei vorzugsweise aus einem nematischen flüssigkristallinen Material gebildet, das aufgrund der optischen Anisotropie der ausgerichteten stäbchenförmigen Flüssigkristalle die Herstellung optisch aktiver Schichten ermöglicht.

Um den Effekt der λ/2-Schicht gebietsweise abzuschwächen und/oder neue Effekte zu erzeugen, kann die λ/2-Schicht auch aus mehreren übereinander angeordneten und bereichsweise gegeneinander in der Schichtebene verdrehten Teilschichten gebildet sein. Besonders vorteilhaft sind die Teilschichten dabei durch zwei λ/4-Schichten gebildet. Durch eine bereichsweise unterschiedliche Verdrehung der beiden λ/4-Teilschichten lässt sich ihr Einfluss auf zirkular polarisiertes Licht gezielt steuern, um beispielsweise codierte Halbtonbilder zu erzeugen.

Die erste und zweite lichtpolarisierende Schicht können in einer bevorzugten Ausgestaltung in eine dritte Reflexionsrichtung Licht eines dritten Wellenlängenbereichs selektiv reflektieren. Die semitransparente Filterschicht absorbiert dabei Licht aus dem sichtbaren Spektralbereich zumindest teilweise und transmittiert Licht aus dem ersten und/oder zweiten und/oder dritten Wellenlängenbereich.

Die erste und zweite lichtpolarisierende Schicht reflektieren in einer bevorzugten Ausgestaltung in alle Reflexionsrichtungen Licht aus dem sichtbaren Spektralbereich. In anderen, ebenfalls vorteilhaften Ausgestaltungen reflektieren die beiden lichtpolarisierenden Schichten zumindest in eine der Reflexionsrichtungen Licht aus dem nicht sichtbaren Spektralbereich, insbesondere Infrarot- oder Ultraviolettstrahlung. Die Reflexion im nicht sichtbaren Spektralbereich kann beispielsweise für maschinenlesbare Echtheitsmerkmale eingesetzt werden oder für Farbkippeffekte, bei denen ein sichtbarer Farbeindruck beim Kippen erscheint oder verschwindet.

Die erste und zweite und gegebenenfalls die dritte Reflexionsrichtung können beliebig gewählt werden. Um die verschiedenen Farbeindrücke der beiden Wellenlängenbereiche visuell gut trennen zu können, sind die erste und zweite und gegebenenfalls die dritte Reflexionsrichtung, bezogen auf eine Flächennormale auf die lichtpolarisierenden Schichten, vorzugsweise durch einen Polwinkel von 20° oder mehr getrennt. Besonders bevorzugt sind die erste und zweite Reflexionsrichtung, bezogen auf eine Flächennormale auf die lichtpolarisierenden Schichten, durch einen Polwinkel von 40° oder mehr getrennt. Beispielsweise kann die erste Reflexionsrichtung parallel zur Flächennormalen sein (Polwinkel θ = 0°) und die zweite Reflexionsrichtung einen Winkel von 45° mit der ersten Reflexionsrichtung einschließen (Polwinkel θ = 45°).

In allen Ausgestaltungen können die verschiedenen Schichten des Sicherheitselements in Form von Zeichen und/oder Mustern vorliegen. Auch können weitere Schichten aus nematischem und/oder cholesterischem flüssigkristallinem Material vorgesehen sein. Zumindest eine der lichtpolarisierenden Schichten aus cholesterischem flüssigkristallinem Material und/oder gegebenenfalls zumindest eine Schicht aus nematischem flüssigkristallinem Material liegt zweckmäßig in Form von Pigmenten vor, welche in eine Bindemittelmatrix eingebettet sind. Solche Pigmente sind einfacher zu drucken als Flüssigkristalle aus Lösung und stellen keine so hohen Anforderungen an die Glätte des Untergrunds. Darüber hinaus benötigen die pigmentbasierten Druckfarben keine die Ausrichtung fördernden Maßnahmen.

Die erste und zweite lichtpolarisierende Schicht können in einer vorteilhaften Ausgestaltung beide aus cholesterischem flüssigkristallinem Material gebildet sein und in Form von Pigmenten vorliegen. Eine Mischung gleicher Anteile von Pigmenten der ersten und zweiten lichtpolarisierenden Schicht ist dabei zweckmäßig in eine Bindemittelmatrix eingebettet. Dadurch lassen sich die erste und zweite lichtpolarisierende Schicht, die zusammen einen Bandsperrfilter bilden, in einem Druckvorgang als eine Schicht aufbringen.

Vorzugsweise transmittiert die semitransparente Filterschicht Licht zwischen dem ersten und zweiten und gegebenenfalls dem dritten Wellenlängenbereich und absorbiert sichtbares Licht außerhalb der beiden Wellenlängenbereiche. Das Durchlicht durch das Sicherheitselement wird dann im Wesentlichen nur von den Flüssigkristallschichten gesteuert, so dass intensive und kontrastreiche Durchlicht-Farbeffekte erzeugt werden können.

Es kann auch vorgesehen sein, dass die semitransparente Filterschicht nur Licht des ersten und/oder zweiten und/oder dritten Wellenlängenbereichs transmittiert und sichtbares Licht außerhalb des ersten und/oder zweiten und/oder dritten Wellenlängenbereichs absorbiert. Dadurch können Sicherheitselemente geschaffen werden, bei denen beim Kippen ein oder mehrere sichtbare Farbeindrücke verschwinden und in dunkle Betrachtungsbereiche übergehen.

Die semitransparente Filterschicht ist in vorteilhaften Ausgestaltungen der Erfindung durch eine mit Farbstoffen eingefärbte Folie oder Lackschicht gebildet. In letzterem Fall kann die Lackschicht auf einer transparenten und farblosen Trägerfolie aufgebracht sein. Wie die lichtpolarisierenden Schichten kann die semitransparente Filterschicht alternativ oder zusätzlich in Form von Zeichen und/oder Mustern vorliegen.

Die lichtpolarisierenden Schichten und die semitransparente Filterschicht können auf einem Substrat vorliegen, das mit Vorteil aus Papier oder Kunststoff gebildet ist. Zwischen benachbarten lichtpolarisierenden Schichten und/oder einer lichtpolarisierenden Schicht und der semitransparenten Filterschicht können zur Ausrichtung von flüssigkristallinen Schichten bestimmte Ausrichtungs- bzw. Alignmentschichten und/oder Klebeschichten vorliegen.

Das Sicherheitselement bildet in vorteilhaften Ausgestaltungen ein Etikett oder ein Transferelement.

Die Erfindung umfasst auch ein Verfahren zum Herstellen eines Sicherheitselements der beschriebenen Art, bei dem auf einer semitransparenten Filterschicht übereinander eine erste lichtpolarisierende Schicht aus einem cholesterischen flüssigkristallinen Material und eine zweite lichtpolarisierende Schicht, die zumindest eine (Teil-)Schicht aus einem cholesterischen flüssigkristallinen Material enthält, angeordnet werden. Eine oder mehrere der Flüssigkristallschichten werden dabei mit Vorteil auf eine Trägerfolie aufgebracht, insbesondere aufgedruckt. Werden verschiedene Flüssigkristallschichten auf separaten Trägerfolien aufgebracht, so können sie nach dem Aufbringen auf die Trägerfolie jeweils auf Eignung zur Weiterverarbeitung geprüft und gegebenenfalls ausgesondert werden. Alternativ können zwei oder mehr Flüssigkristallschichten übereinander auf derselben Trägerfolie aufgebracht werden.

Das flüssigkristalline Material kann aus einem Lösungsmittel oder aus der Schmelze aufgebracht werden. Ferner kann insbesondere cholesterisches flüssigkristallines Material in pastöser Form als UV-härtbare cholesterische Mischung aufgebracht werden, wobei ein solches System weder typische Lösungsmittel enthält, noch auf einer Schmelze oder Pigmenten basiert, sondern stattdessen weitere UV-härtbare Lacke enthält. Je nach angewandtem Verfahren wird das flüssigkristalline Material anschließend zur Entfernung des Lösungsmittels physikalisch getrocknet, ausgerichtet und gehärtet. Die Ausrichtung kann direkt über die Trägerfolie oder über so genannte Alignmentschichten, durch Ausübung von Scherkräften, mithilfe elektrostatischer Methoden usw. erfolgen. Zur Härtung des flüssigkristallinen Materials kann dieses vernetzt werden, beispielsweise mittels ultravioletter Strahlung oder mittels Elektronenstrahl (ESH). Das flüssigkristalline Material kann aber auch durch Zugabe bestimmter Additive fixiert werden.

In einer zweckmäßigen Ausgestaltung des Verfahrens werden die auf einer Trägerfolie vorliegenden Flüssigkristallschichten auf die semitransparente Filterschicht oder eine weitere Flüssigkristallschicht auflaminiert. Die Trägerfolie kann nach dem Auflaminieren entfernt werden, insbesondere über Trennschichten oder durch Verwendung eines Laminierklebstoffes, dessen Haftung zur Trägerfolie geringer ist als seine Haftung zur Flüssigkristallschicht. Diese Anforderungen an den Laminierklebstoff sind insbesondere dann von Bedeutung, wenn die zu übertragende Flüssigkristallschicht nicht vollflächig ausgebildet ist.

Alternativ kann auf die auf der Trägerfolie vorliegende Flüssigkristallschicht eine vollflächige Hilfsschicht aufgebracht werden, deren Haftung zur Trägerfolie geringer ist als ihre Haftung in Bezug auf die Flüssigkristallschicht, um die Trennung zu ermöglichen. Dadurch lässt sich der Laminierklebstoff vollflächig aufbringen, wobei gleichzeitig unkontrolliertes Verkleben verhindert wird. Die Hilfsschicht ist dabei mit Vorteil eine UV-Lackschicht.

Die Ausbildung der cholesterischen Flüssigkristallschichten kann mit Vorteil durch Kombination eines nematischen Flüssigkristallsystems mit einem Verdriller geschehen. Dabei können die beiden cholesterischen Flüssigkristallschichten durch Kombination eines nematischen Flüssigkristallsystems mit aufeinander abgestimmten ersten und zweiten Verdrillern gebildet werden, so dass sich die Flüssigkristalle der ersten und zweiten Schicht in zueinander spiegelbildlichen Helixstrukturen anordnen.

Die λ/2-Teilschicht der aus zwei Teilschichten gebildeten zweiten lichtpolarisierenden Schicht wird zweckmäßig aus einem nematischen flüssigkristallinen Material gebildet.

Die Erfindung enthält ferner eine Sicherheitsanordnung für Sicherheitspapiere, Wertdokumente und dergleichen mit einem Sicherheitselement der beschriebenen Art oder einem nach dem beschriebenen Verfahren herstellbaren Sicherheitselement sowie einem separaten Darstellungselement, das in Zusammenwirkung mit dem Sicherheitselement einen Farbkippeffekt und/ oder einen Polarisationseffekt für den Betrachter erkennbar macht. In einer bevorzugten Ausgestaltung umfasst das Darstellungselement einen dunklen, vorzugsweise schwarzen Untergrund, der auch in Form von Zeichen und/oder Mustern vorliegen kann. In einer anderen, ebenfalls bevorzugten Ausgestaltung kann das Darstellungselement auch einen Linear- oder Zirkularpolarisator umfassen.

Die Erfindung umfasst weiter ein Wertdokument mit einem Sicherheitselement oder einer Sicherheitsanordnung der beschriebenen Art. Das Sicherheitselement ist dabei mit Vorteil in einem Fensterbereich des Wertdokuments angeordnet, also in einem transparenten oder zumindest transluzenten Bereich des Wertdokuments, oder über einer ausgestanzten oder papiermacherisch erzeugten Öffnung. Im Rahmen der vorliegenden Beschreibung bezeichnet der Begriff "Transparenz" dabei die volle Durchsichtigkeit eines Materials, "transluzent" bedeutet durchscheinend im Sinne einer gewissen Lichtdurchlässigkeit, d.h. das Material weist insbesondere eine Lichtdurchlässigkeit von unter 90 %, zumeist zwischen 80 % und 20 %, auf. Wesentlich ist nur, dass durch den Fensterbereich Licht auf die Rückseite des Sicherheitselements fallen kann, so dass es im Durchlicht betrachtet werden kann. Besonders bevorzugt ist das Wertdokument flexibel ausgebildet, so dass das Sicherheitselement und das Darstellungselement durch Biegen oder Falten des Wertdokuments zur Selbstauthentifizierung übereinander gelegt werden können.

Wertdokumente im Sinne der vorliegenden Erfindung sind daher insbesondere Banknoten, Aktien, Ausweise, Kreditkarten, Anleihen, Urkunden, Gutscheine, Schecks, hochwertige Eintrittskarten, aber auch andere fälschungsgefährdete Papiere, wie Pässe und sonstige Ausweisdokumente. Der Begriff "Wertdokument" schließt im Folgenden alle derartigen Dokumente ein. Unter dem Begriff "Sicherheitspapier" wird die noch nicht umlauffähige Vorstufe zu einem Wertdokument verstanden, die neben dem Sicherheitselement weitere Echtheitsmerkmale, wie z.B. im Volumen vorgesehene Lumineszenzstoffe, aufweisen kann. Sicherheitspapier liegt üblicherweise in quasi endloser Form vor und wird zu einem späteren Zeitpunkt weiterverarbeitet.

Bei einem Verfahren zur Echtheitsprüfung eines Sicherheitselements, einer Sicherheitsanordnung oder eines Wertdokuments der oben beschriebenen Art wird im Durchlicht geprüft, ob ein vorbestimmter Farbkippeffekt vorliegt und die Echtheit des geprüften Elements auf Grundlage des Prüfungsergebnisses beurteilt. Bei einem weiteren Prüfungsverfahren wird das Sicherheitselement auf einen, gegebenenfalls durch das Darstellungselement gebildeten, dunklen Untergrund gelegt. Mithilfe eines Zirkularpolarisators wird dann eine in dem Sicherheitselement codierte Information gelesen und die Echtheit des geprüften Elements auf Grundlage des Leseergebnisses beurteilt.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem über einer ausgestanzten Öffnung aufgeklebten Transferelement nach einem Ausführungsbeispiel der Erfindung,
- Fig. 2: den allgemeinen Schichtaufbau eines erfindungsgemäßen Sicherheitselements im Querschnitt,
- Fig. 3: eine Prinzipskizze eines aus zwei cholesterischen Flüssigkristallschichten und einer Semitransparenten Filterschicht-gebildeten Bandsperrfilters,
- Fig. 4: in (a) ein Sicherheitselement nach einem Ausführungsbeispiel der Erfindung im Querschnitt, in der linken Bildreihe (b)-(d) die Transmissionscharakteristiken der semitransparenten Filterschicht, der Flüssigkristallschichten und die gesamte Transmission des Sicherheitselements für senkrechte Betrachtung, und in der rechten Bildreihe (e)- (g) die entsprechenden Transmissionscharakteristiken für eine Betrachtung unter spitzem Winkel,
- Fig. 5: in (a) den Querschnitt eines Sicherheitselements nach einem anderen Ausführungsbeispiel der Erfindung, und in (b) bis (d) Ansichten dieses Sicherheitselements bei verschiedenen Kippwinkeln,
- Fig. 6: ein Sicherheitselement nach einem weiteren Ausführungsbeispiel der Erfindung,
- Fig. 7: das Sicherheitselement der Fig. 6 auf einem dunklen Untergrund und mit einem Zirkularpolarisator zum Auslesen der codierten Information, und
- Fig. 8: ein Sicherheitselement wie in Fig. 4(a), bei dem eine der cholesterischen Flüssigkristallschichten durch eine Kombination aus einer λ/2-Schicht und einer gegenläufigen cholesterischen Flüssigkristallschicht ersetzt ist.

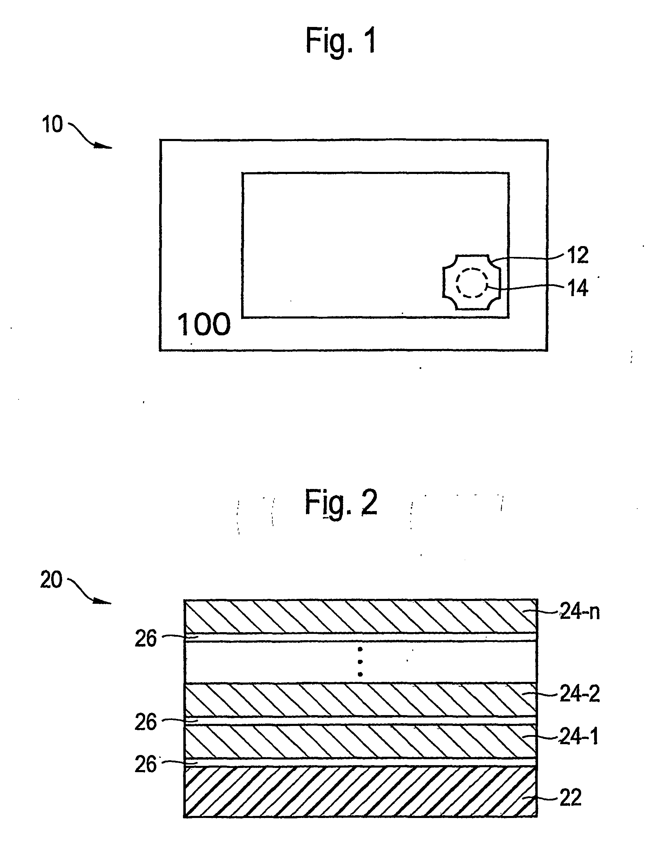

Die Erfindung wird nun am Beispiel einer Banknote erläutert. Fig.1 zeigt eine schematische Darstellung einer Banknote 10, die mit einem aufgeklebten Transferelement 12 nach einem Ausführungsbeispiel der Erfindung versehen ist. Die Banknote 10 weist eine durchgehende gestanzte Öffnung 14 auf, die auf der Vorderseite der Banknote von dem Transferelement 12 vollständig bedeckt ist. Selbstverständlich können die nachstehenden Ausführungsbeispiele zu erfindungsgemäßen Sicherheitselementen auch auf einem Dokument aus Kunststoff, wie einer Kunststoffbanknote, vorgesehen werden. Hier wird die transparente Öffnung vorzugsweise durch einen nicht bedruckten Bereich des Dokuments gebildet. Im Durchlicht zeigt das Transferelement 12 einen inversen Farbkippeffekt, bei dem der Farbeindruck des Transferelements beim Kippen aus der Senkrechten vom kurzwelligen Farbeindruck (im Ausführungsbeispiel Blau) zu einem längerwelligen Farbeindruck (im Ausführungsbeispiel Grün) wechselt.

Fig. 2 zeigt den prinzipiellen Schichtaufbau eines erfindungsgemäßen Sicherheitselements 20, wie etwa des Transferelements 12, im Querschnitt. Eine semitransparente Filterschicht 22, beispielsweise eine eingefärbte, glatte PET-Folie guter Oberflächenqualität, ist mit zwei oder mehreren, im allgemeinen Fall n lichtpolarisierenden Schichten 24-1, 24-2, ... 24-n aus flüssigkristallinem Material versehen, die in verschiedenen Ausführungsformen jeweils unterschiedliche oder auch teilweise die gleichen lichtpolarisierenden Eigenschaften aufweisen können.

Zwischen zwei benachbarten Schichten bzw. zwischen der ersten lichtpolarisierenden Schicht 24-1 und der semitransparenten Filterschicht 22 können Alignmentschichten und/oder Klebeschichten 26 vorgesehen sein, die der Ausrichtung der Flüssigkristalle in den Flüssigkristallschichten bzw. der Verbindung der einzelnen Schichten und dem Ausgleich von Unebenheiten des Untergrunds dienen.

Zwei der flüssigkristallinen Schichten 24-1, 24-2, ... 24-n bestehen erfindungsgemäß aus einem cholesterischen flüssigkristallinen Material und reflektieren jeweils selektiv Licht mit einer vorbestimmten zirkularen Polarisation. Dabei reflektieren sie in eine erste Reflexionsrichtung selektiv Licht eines ersten Wellenlängenbereichs und in eine zweite, unterschiedliche Reflexionsrichtung selektiv Licht eines zweiten Wellenlängenbereichs. In den nachfolgenden Ausführungsbeispielen wird stets angenommen, dass die flüssigkristallinen Schichten bei senkrechtem Lichteinfall grünes Licht und bei spitzwinkligem Lichteinfall blaues Licht reflektieren. Es versteht sich, dass diese Farbwahl nur der Illustration dient und dass im Rahmen der Erfindung selbstverständlich auch Flüssigkristallschichten mit anderen Farbcharakteristiken verwendet werden können.

Die zirkularen Polarisationsrichtungen des von den beiden cholesterischen Flüssigkristallschichten reflektierten Lichts können gegenläufig oder gleichläufig sein. Im letzteren Fall ist zwischen den beiden cholesterischen Flüssigkristallschichten eine λ/2-Schicht vorgesehen, die im relevanten Wellenlängenbereich die Polarisationsrichtung zirkular polarisierten Lichts gerade umkehrt. Insgesamt reflektiert die Schichtenfolge aus den beiden cholesterischen Flüssigkristallschichten und gegebenenfalls der zwischenliegenden λ/2-Schicht somit Licht beider zirkularer Polarisationsrichtungen und wirkt daher in Transmission als Bandsperrfilter für den jeweiligen Wellenlängenbereich.

Die semitransparente Filterschicht kann aus einer mit Farbstoffen eingefärbten Folie bestehen, die zugleich als Trägerfolie für die Flüssigkristallschichten dient. Sie kann auch durch eine mit Farbstoffen eingefärbte Lackschicht gebildet sein, die beispielsweise auf einer transparenten und farblosen Trägerfolie aufgedruckt ist. Die Trägerfolie kann nach dem Aufbringen des Sicherheitselements auf ein Wertdokument entfernt werden, beispielsweise wenn das Sicherheitselement einen transparenten, undurchbrochenen Fensterbereich eines Wertdokuments bedeckt.

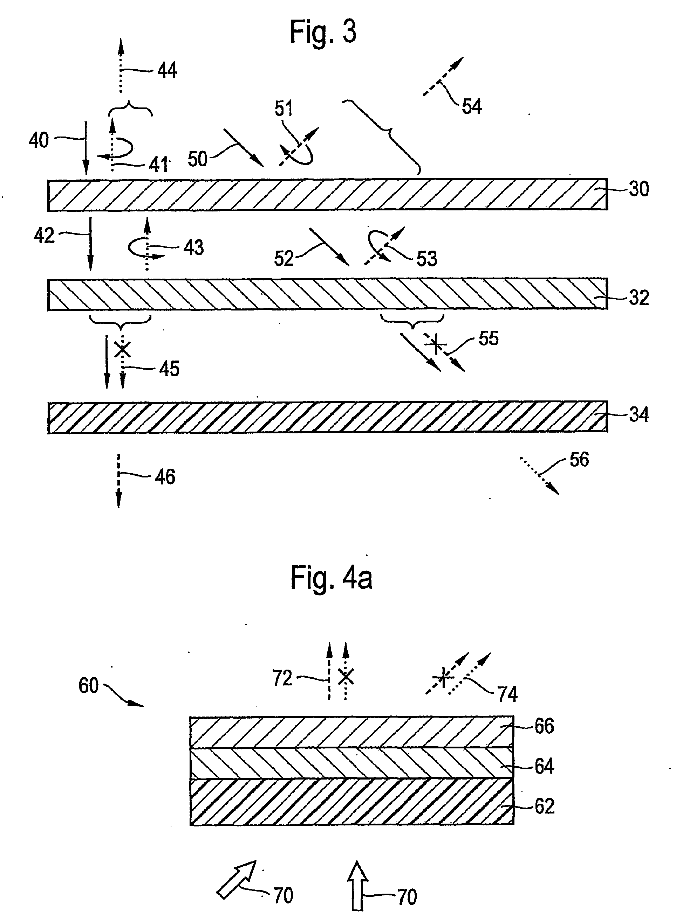

Das Prinzip eines durch zwei cholesterische Flüssigkristallschichten und die semitransparente Filterschicht gebildeten Bandsperrfilters wird nun anhand der Darstellung der Fig. 3 näher erläutert. Fig. 3 zeigt zwei übereinander liegende cholesterische Flüssigkristallschichten 30 und 32 sowie eine semi-transparente Filterschicht 34, die zur Illustration der transmittieren und reflektierten Lichtstrahlen voneinander beabstandet dargestellt sind. Die Polarisationsrichtung des Lichts ist durch zusätzliche Pfeilsymbole an den Ausbreitungsvektoren des Lichts angegeben. Wie üblich, wird eine zirkulare Polarisation, bei der die Kreisbewegung des elektrischen Feldstärkenvektors aus Sicht eines Beobachters, auf den die Lichtwelle zuläuft, im Uhrzeigersinn erfolgt, als rechtszirkulare Polarisation, die gegenläufige Polarisation als linkszirkulare Polarisation bezeichnet.

Die beiden Flüssigkristallschichten 30 und 32 sind so ausgebildet, dass sie dasselbe selektive Farbreflexionsspektrum aufweisen und beispielsweise in die senkrechte Reflexionsrichtung grünes Licht und in eine spitzwinklige Reflexionsrichtung blaues Licht reflektieren. Die beiden Flüssigkristallschichten 30 und 32 unterscheiden sich allerdings in der zirkularen Polarisationsrichtung der reflektierten Strahlung. Während die erste Flüssigkristallschicht 30 im Ausführungsbeispiel rechtszirkular polarisiertes Licht reflektiert, reflektiert die zweite Flüssigkristallschicht 32 linkszirkular polarisiertes Licht der jeweiligen Wellenlänge. Die jeweils gegenläufige Polarisationsrichtung sowie Licht mit Wellenlängen außerhalb des Bereichs selektiver Reflexion werden von den Flüssigkristallschichten ohne wesentliche Absorption durchgelassen. Die semitransparente Filterschicht ist mit Farbstoffen eingefärbt, so dass sie im sichtbaren Spektralbereich nur für blaues und grünes Licht durchlässig ist und längerwelliges Licht absorbiert.

Wird die Schichtenfolge 30, 32, 34 mit weißem Licht 40,50 bestrahlt, so ergibt sich für die transmittierte und reflektierte Strahlung folgendes Bild: Von dem senkrecht einfallenden weißen Licht 40 wird der rechtszirkular polarisierte grüne Anteil 41 von der ersten Flüssigkristallschicht 30 reflektiert, der linkszirkular polarisierte grüne Anteil sowie alle anderen Wellenlängen werden durchgelassen. Von der durchgelassenen Strahlung 42 reflektiert dann die zweite Flüssigkristallschicht 32 den linkszirkular polarisierten grünen Anteil 43 des Lichts und lässt Licht der anderen Wellenlängen durch. Der grüne Spektralanteil 44 des weißen Lichts wird somit von der Schichtenfolge 30,32 im Wesentlichen vollständig reflektiert, da seine beiden zirkularen Polarisationsrichtungen reflektiert werden. Von der nach den beiden Flüssigkristallschichten verbleibenden Strahlung 45, die weißes Licht ohne den grünen Spektralanteil 44 darstellt, lässt die semitransparente Filterschicht 34 nun lediglich den blauen Anteil 46 durch. Die anderen Wellenlängen des weißen Lichts werden absorbiert.

Für das unter einem spitzen Winkel einfallende weiße Licht 50 verschiebt sich der reflektierte Wellenlängenbereich aufgrund der physikalischen Gegebenheiten in den kürzerwelligen Bereich, im Ausführungsbeispiel von grünem zu blauem Licht. Entsprechend reflektiert die erste Flüssigkristallschicht 30 den rechtszirkular polarisierten blauen Lichtanteil 51, während der linkszirkular polarisierte blaue Anteil sowie die anderen Wellenlängen durchgelassen werden. Die zweite Flüssigkristallschicht 32 reflektiert von der durchgelassenen Strahlung 52 den linkszirkular polarisierten blauen Anteil 53 des Lichts und lässt Licht der anderen Wellenlängen durch. In die spitzwinklige Richtung wird somit der blaue Spektralanteil 54 des weißen Lichts von der Schichtenfolge 30, 32 vollständig reflektiert. Von der nach den beiden Flüssigkristallschichten verbleibenden Strahlung 55 lässt die semitransparente Filterschicht 34 nun lediglich den grünen Anteil 56 durch, die anderen Wellenlängen des weißen Lichts werden absorbiert.

Im Durchlicht zeigt die Schichtenfolge 30, 32, 34 somit insgesamt einen umgekehrten Farbkippeffekt, bei dem der Farbeindruck für den Betrachter von kurzwelligem Blau 46 bei senkrechter Betrachtung zu längerwelligem Grün 56 bei spitzwinkliger Betrachtung wechselt. Wie unmittelbar ersichtlich, tritt der beschriebene Durchlicht-Farbkippeffekt unabhängig davon auf, ob die Beleuchtung von oben, also der Seite der Flüssigkristallschichten 30, 32, oder von unten, also der Seite der semitransparenten Filterschicht 34, her erfolgt.

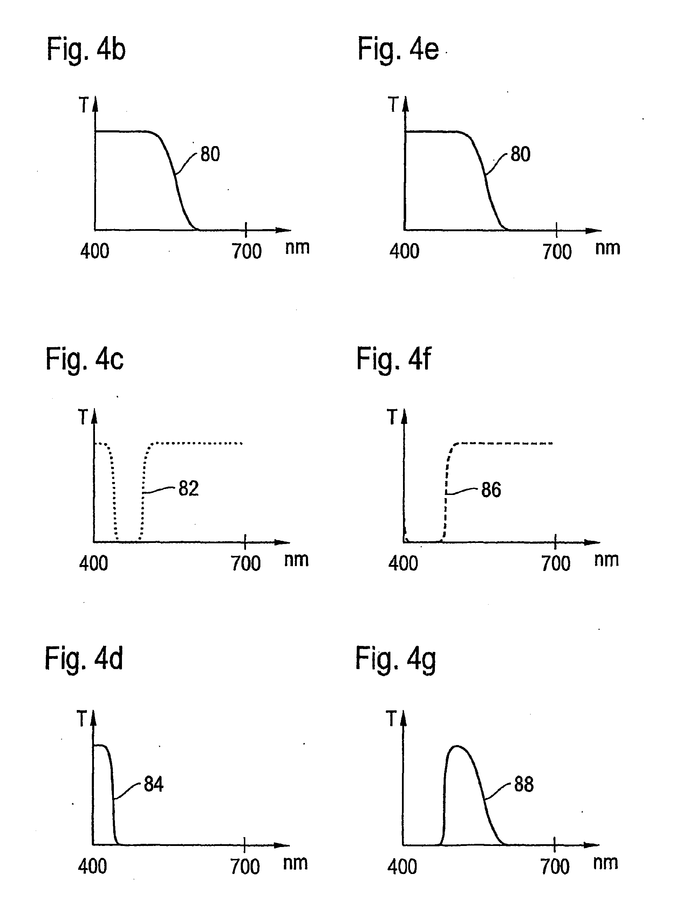

Fig. 4(a) zeigt ein Sicherheitselement 60 nach einem Ausführungsbeispiel der Erfindung, das das geschilderte Prinzip ausnutzt. Auf einer mit Farbstoffen eingefärbten semitransparenten Folie 62 sind zwei cholesterische Flüssigkristallschichten 64 und 66 aufgebracht, die dieselben lichtpolarisierenden Eigenschaften wie die oben beschriebenen Flüssigkristallschichten 32 bzw. 30 aufweisen, also in die senkrechte Reflexionsrichtung grünes Licht und in eine spitzwinklige Reflexionsrichtung blaues Licht jeweils gegenläufiger zirkularer Polarisation reflektieren. Bei Beleuchtung des Sicherheitselements 60 von hinten, wie sie beispielsweise bei Betrachtung gegen das Tageslicht 70 auftritt, lässt das Sicherheitselement, wie in Zusammenhang mit der Fig. 3 erläutert, in senkrechter Richtung nur den blauen Anteil 72 des Tageslichts durch, während bei spitzwinkliger Betrachtung nur der grüne Anteil 74 erscheint. Der Betrachter beobachtet somit beim Kippen des Sicherheitselements 60 einen umgekehrten Durchlicht-Farbkippeffekt.

Die Figuren 4(b) bis 4(g) zeigen die Transmissionscharakteristiken der semitransparenten Filterschicht 62, der Flüssigkristallschichten 64, 66 und die gesamte Transmission des Sicherheitselements 60 für senkrechte Betrachtung (linke Bildreihe, Figuren 4(b) - (d)) und für eine Betrachtung unter spitzem Winkel (rechte Bildreihe, Figuren 4(e) bis (g)).

Wie die in Fig. 4(b) und (e) dargestellte Transmissionscharakteristik 80 zeigt, lässt die eingefärbte Folie 62 im sichtbaren Spektralbereich nur blaues und grünes Licht durch und absorbiert längerwelliges Licht. Bei senkrechter Betrachtung wirken die cholesterischen Flüssigkristallschichten 64, 66 als Bandsperrfilter für grünes Licht, wie durch den Transmissionsverlauf 82 gezeigt. Die Kombination der beiden Kurven 80 und 82 ergibt die gesamte senkrechte Transmission 84 des Sicherheitselements 60, die, wie oben beschrieben, lediglich im Blauen einen nennenswerten Wert aufweist.

Unter spitzwinkliger Betrachtung bilden die cholesterischen Flüssigkristallschichten 64, 66 einen Bandsperrfilter für blaues Licht, wie durch den Transmissionsverlauf 86 angegeben. Die gesamte Transmission 88 ergibt sich wieder durch Kombination der Kurven 80 und 86 und zeigt erwartungsgemäß einen Transmissionspeak im grünen Spektralbereich.

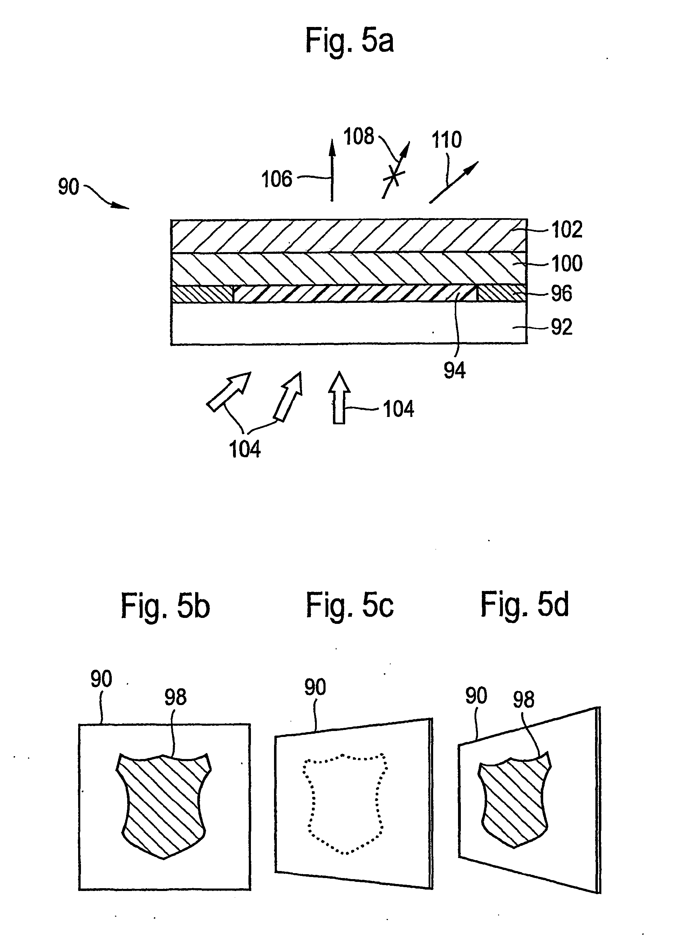

Ein weiteres Ausführungsbeispiel der Erfindung ist in Fig. 5(a) dargestellt. Das Sicherheitselement 90 weist eine transparente Trägerfolie 92 auf, auf der in Teilbereichen eine mit Farbstoffen eingefärbte Lackschicht 94 aufgedruckt ist. In anderen Bereichen ist die Trägerfolie mit einer dunklen Untergrundschicht 96 versehen. Die von der Lackschicht 94 bedeckten Bereiche bilden dabei durch ihre Form oder Umriss ein Motiv, im Ausführungsbeispiel ein Wappen 98.

Auf die Lackschicht 94 bzw. die dunkle Untergrundschicht 96 sind zwei cholesterische Flüssigkristallschichten 100 und 102 aufgebracht, die in die senkrechte Reflexionsrichtung Licht eines ersten Wellenlängenbereichs, in eine zweite Reflexionsrichtung mit mittlerem Polwinkel Licht eines zweiten, kürzerwelligen Wellenlängenbereichs und in eine dritte, spitzwinklige Reflexionsrichtung Licht eines dritten, kürzestwelligen Wellenlängenbereichs selektiv reflektiert.

Die als semitransparente Filterschicht wirkende Lackschicht 94 ist in diesem Ausführungsbeispiel mit zwei Farbstoffen versehen, die Licht des ersten und dritten Wellenlängenbereichs absorbieren, so dass im Wesentlichen nur Licht des zweiten, mittleren Wellenlängenbereichs durchgelassen wird.

Bei Beleuchtung des Sicherheitselements 90 von hinten (Bezugszeichen 104) ergibt sich für den Betrachter im Durchlicht folgendes Bild: Bei senkrechter Betrachtung 106 tritt das Wappen 98 für den Betrachter deutlich in Erscheinung, wie in Fig. 5 (b) gezeigt. In diese Betrachtungsrichtung reflektieren die Flüssigkristallschichten 100 und 102 Licht aus dem ersten Wellenlängenbereich und transmittieren daher Licht des zweiten und dritten Wellenlängenbereichs. Da Licht des dritten Wellenlängenbereichs von der semitransparenten Filterschicht 94 absorbiert wird und diese daher lediglich für Licht aus dem zweiten Wellenlängenbereich durchlässig ist, gelangt allerdings nur letzteres durch die Flüssigkristallschichten 100,102 zum Betrachter. Der mit der Untergrundschicht 96 versehene Bereich des Sicherheitselements bleibt dagegen dunkel, so dass das Wappenmotiv 98 mit deutlichem Kontrast aufleuchtet.

Kippt der Betrachter nun das Sicherheitselement 90 aus der Senkrechten, so dass das einfallende Licht 104 unter der zweiten Reflexionsrichtung auf die Flüssigkristallschichten fällt (Bezugszeichen 108), so verschwindet das Wappen 98, wie in Fig. 5(c) angedeutet. In diese Betrachtungsrichtung reflektieren nämlich die Flüssigkristallschichten 100, 102 das von der semitransparenten Filterschicht 94 transmittierte Licht aus dem zweiten Wellenlängenbereich. Die mit der semitransparenten Filterschicht 94 und der dunklen Untergrundschicht 96 versehenen Bereiche des Sicherheitselements sind daher gleichermaßen opak, so dass das Wappenmotiv für den Betrachter nicht erkennbar ist.

Bei einer weiteren Verkippung (Bezugszeichen 110) des Sicherheitselements 90 erscheint das Motiv 98 wieder, wie in Fig. 5(d) gezeigt, da die Flüssigkristallschichten 100, 102 unter dem spitzeren Einfallswinkel nur Licht des dritten Wellenlängenbereichs selektiv reflektieren und daher, ebenso wie die semitransparente Filterschicht 94, für Licht aus dem zweiten Wellenlängenbereich durchlässig sind.

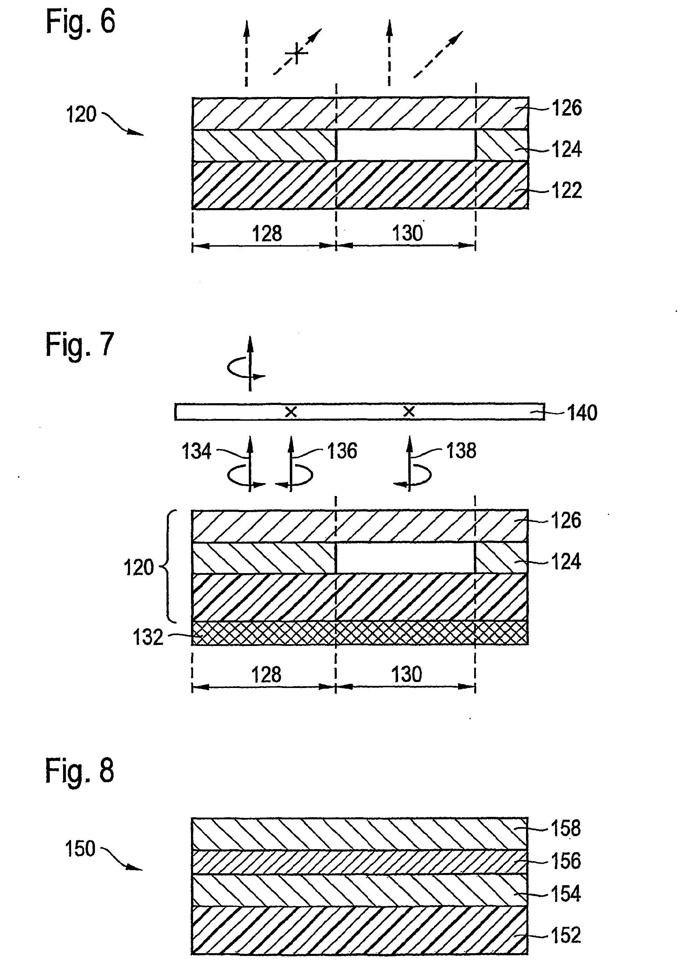

Das Sicherheitselement 120 des weiteren Ausführungsbeispiels der Fig. 6 enthält eine semitransparente Filterschicht 122, auf die eine erste und zweite cholesterische Flüssigkristallschicht 124 bzw.126 aufgebracht sind, die wieder die gleichen lichtpolarisierenden Eigenschaften wie die Flüssigkristallschichten 32 bzw. 30 aufweisen sollen. Im Ausführungsbeispiel ist die erste cholesterische Flüssigkristallschicht 124 nur bereichsweise in Form eines Motivs, etwa eines Schriftzugs, aufgebracht. Die Transmissionscharakteristik der semitransparenten Filterschicht 122 ist im Ausführungsbeispiel so gewählt, dass nur blaues Licht transmittiert, längerwelliges grünes und rotes Licht dagegen absorbiert wird.

Die von beiden Flüssigkristallschichten 124 und 126 bedeckten Bereiche 128 des Sicherheitselements 120 erscheinen im Durchlicht daher bei senkrechter Betrachtung blau, unter spitzem Betrachtungswinkel dagegen dunkel, da das von der semitransparenten Filterschicht 122 durchgelassene blaue Licht von den Flüssigkristallschichten 124, 126 in dieser Richtung vollständig ausgeblendet wird.

In dem ausgesparten Bereich 130 ohne erste Flüssigkristallschicht tritt das blaue Licht jedoch auch unter spitzem Betrachtungswinkel in Erscheinung, da von der zweiten Flüssigkristallschicht 126 nur noch eine der beiden zirkularen Polarisationsrichtungen des blauen Lichts reflektiert wird. Insgesamt geht die gleichförmige blaue Erscheinung des Sicherheitselements 120 im Durchlicht beim Kippen aus der Senkrechten in eine Motivdarstellung in Form der von der zweiten Flüssigkristallschicht freigelassenen Bereiche 130 über.

Das Sicherheitselement 120 der Fig. 6 erlaubt noch eine weitere Sichtbarmachung des eincodierten Motivs, die nun mit Bezug auf Fig. 7 erläutert wird. Für diese Prüfmethode wird das Sicherheitselement 120 zur Ausblendung des Durchlichts auf eine dunkle, absorbierende Hintergrundschicht 132 gelegt und bei Beleuchtung von vorne in Reflexion betrachtet. Eine solche Hintergrundschicht kann beispielsweise durch ein separates Darstellungselement bereitgestellt werden, das ebenso wie das Sicherheitselement 120 auf einem Wertdokument, z.B. einer Banknote, zur Selbstauthentifizierung vorliegt.

Betrachtet man das Sicherheitselement 120 ohne Hilfsmittel, so tritt in erster Linie der Farbkippeffekt der zweiten Flüssigkristallschicht 126 in Erscheinung. In den ausgesparten Bereichen 130 ist das Motiv jeweils mit demselben Farbeindruck, aber einer gegenüber seiner Umgebung verringerten Helligkeit erkennbar, da im Überlappungsbereich 128 Licht beider zirkularer Polarisationsrichtungen 134,136 reflektiert wird, während in den ausgesparten Bereichen 130 nur Licht einer zirkularen Polarisationsrichtung, im Ausführungsbeispiel rechtszirkular polarisiertes Licht 138, reflektiert wird.

Betrachtet man nun das Sicherheitselement 120 durch einen Zirkularpolarisator 140, der nur linkszirkular polarisiertes Licht durchlässt, so tritt das durch die erste Flüssigkristallschicht 124 gebildete Motiv mit deutlichem Helligkeitskontrast hervor, da der Zirkularpolarisator 140 das von der zweiten Flüssigkristallschicht 126 reflektierte, rechtszirkular polarisierte Licht vollständig ausblendet. Ein solcher Zirkularpolarisator 140 kann beispielsweise durch einen Linearpolarisator und ein nachgeschaltetes λ/4-Plättchen gebildet sein. Ferner kann dieser als separates Darstellungselement bereitgestellt werden, das zur Selbstauthentisierung ebenso wie das Sicherheitselement 120 und gegebenenfalls die dunkle Hintergrundschicht, auf dem Wertdokument vorliegt.

In allen geschilderten Ausführungsbeispielen kann eine der beiden cholesterischen Flüssigkristallschichten durch eine Kombination aus einer λ/2-Schicht und einer gegenläufig orientierten cholesterischen Flüssigkristallschicht ersetzt sein. Dies wird beispielhaft für das Ausführungsbeispiel der Fig. 4(a) erläutert.

Fig. 8 zeigt ein Sicherheitselement 150, bei dem die zweite Flüssigkristallschicht 66 der Fig. 4(a) durch eine Kombination aus einer λ/2-Schicht 156 und einer zur Flüssigkristallschicht 66 gegenläufig orientierten, d.h. einer zur Flüssigkristallschicht 154 gleichläufig orientierten cholesterischen Flüssigkristallschicht 158 ersetzt ist. Die auf der semitransparenten Filterschicht 152 angeordnete Flüssigkristall-Schichtenfolge enthält somit zwei cholesterische Flüssigkristallschichten 154 und 158 mit den gleichen lichtpolarisierenden Eigenschaften, so dass die beiden Schichten für sich genommen jeweils Licht derselben zirkularen Polarisation reflektieren.

Die zwischen den beiden cholesterischen Flüssigkristallschichten 154 und 158 angeordnete λ/2-Schicht 156 ist aus nematischem flüssigkristallinem Material gebildet. Die Wirkung der λ/2-Schicht 156 und der zweiten cholesterischen Flüssigkristallschicht 158 zusammengenommen entspricht gerade der Wirkung der zweiten cholesterischen Flüssigkristallschicht 66. Im jeweils relevanten Wellenlängenbereich wird nämlich der von der ersten Flüssigkristallschicht 154 durchgelassene rechtszirkular polarisierte Anteil des Lichts von der λ/2-Schicht 156 in linkszirkular polarisiertes Licht umgewandelt und von der zweiten Flüssigkristallschicht 158 reflektiert. Das reflektierte Licht wird von der λ/2-Schicht 156 dann wieder in rechtszirkular polarisiertes Licht umgewandelt und von der ersten Flüssigkristallschicht 154 transmittiert.

Das Sicherheitselement 150 der Fig. 8 weist somit dieselben Reflexions- und Transmissionseigenschaften wie das Sicherheitselement 60 der Fig. 4(a) auf. Durch die zusätzliche λ/2-Schicht 156 ergeben sich neue Variationsmöglichkeiten, beispielsweise können Motivaussparungen lediglich in die λ/2-Schicht und nicht in die cholesterischen Flüssigkristallschichten 154, 158 eingebracht sein. Die λ/2-Schicht kann auch aus zwei λ/4-Teilschichten bestehen, die zur lokalen Schwächung des lichtpolarisierenden Effekts in der Schichtebene gegeneinander verdreht sein können. Durch einen unterschiedlichen Drehwinkel in verschiedenen Flächenbereichen einer solchen aus zwei λ/4-Teilschichten bestehenden Zwischenschicht lassen sich so beispielsweise Halbtonmotive in dem Sicherheitselement codieren, die sowohl bei Betrachtung im Durchlicht als auch bei Betrachtung durch einen Zirkularpolarisator als Graustufenbilder in Erscheinung treten.

## Patentansprüche

1. Sicherheitselement (60) zur Absicherung von Wertdokumenten, mit
- einer zumindest bereichsweise vorliegenden, ersten lichtpolarisierenden Schicht (64) aus einem cholesterischen flüssigkristallinen Material, die Licht mit einer vorbestimmten zirkularen Polarisation selektiv reflektiert, und die in eine erste Reflexionsrichtung Licht eines ersten Wellenlängenbereichs und in eine zweite, unterschiedliche Reflexionsrichtung Licht eines zweiten Wellenlängenbereichs selektiv reflektiert,
- einer zumindest bereichsweise vorliegenden, zweiten lichtpolarisierenden Schicht (66), die Licht mit der zur vorbestimmten zirkularen Polarisation gegenläufigen zirkularen Polarisation selektiv reflektiert, und die in die erste bzw. zweite Reflexionsrichtung Licht des ersten bzw. zweiten Wellenlängenbereichs selektiv reflektiert,
**gekennzeichnet durch**
- eine semitransparente Filterschicht (62), auf der die erste und zweite lichtpolarisierende Schicht (64, 66) übereinander angeordnet sind, wobei die Filterschicht (62) Licht aus dem sichtbaren Spektralbereich zumindest teilweise absorbiert und Licht aus dem ersten und/ oder zweiten Wellenlängenbereich transmittiert.

2. Sicherheitselement (60) nach Anspruch 1, **dadurch gekennzeichnet, dass** die zweite lichtpolarisierende Schicht (66) aus einem cholesterischen flüssigkristallinen Material gebildet ist, und Licht mit der zur vorbestimmten zirkularen Polarisation gegenläufigen zirkularen Polarisation selektiv reflektiert.

3. Sicherheitselement (60) nach Anspruch 1, **dadurch gekennzeichnet, dass** die zweite lichtpolarisierende Schicht (66) aus zwei Teilschichten gebildet ist, wobei eine erste Teilschicht aus einem cholesterischen flüssigkristallinen Material gebildet ist, und Licht mit der vorbestimmten zirkularen Polarisation selektiv reflektiert, und wobei eine zweite Teilschicht, die zwischen der ersten Teilschicht und der ersten lichtpolarisierenden Schicht angeordnet ist, eine λ/2-Schicht bildet.

4. Sicherheitselement (60) nach Anspruch 3, **dadurch gekennzeichnet, dass** die λ/2-Schicht aus nematischem flüssigkristallinem Material gebildet ist.

5. Sicherheitselement (60) nach Anspruch 3 oder 4, **dadurch gekennzeichnet, dass** die λ/2-Schicht aus mehreren übereinander angeordneten und bereichsweise gegeneinander in der Schichtebene verdrehten Teilschichten gebildet ist.

6. Sicherheitselement (60) nach Anspruch 5, **dadurch gekennzeichnet, dass** die mehreren Teilschichten durch zwei λ/4-Schichten gebildet sind.

7. Sicherheitselement (60) nach wenigstens einem der Ansprüche 1 bis 6, **dadurch gekennzeichnet, dass** die erste (64) und zweite (66) lichtpolarisierende Schicht in eine dritte Reflexionsrichtung Licht eines dritten Wellenlängenbereichs selektiv reflektieren, und die semitransparente Filterschicht (62) Licht aus dem sichtbaren Spektralbereich zumindest teilweise absorbiert und Licht aus dem ersten und/ oder zweiten und/ oder dritten Wellenlängenbereich transmittiert.

8. Sicherheitselement (60) nach wenigstens einem der Ansprüche 1 bis 7, **dadurch gekennzeichnet, dass** die erste (64) und zweite (66) lichtpolarisierende Schicht in alle Reflexionsrichtungen Licht aus dem sichtbaren Spektralbereich reflektieren.

9. Sicherheitselement (60) nach wenigstens einem der Ansprüche 1 bis 7, **dadurch gekennzeichnet, dass** die erste (64) und zweite (66) lichtpolarisierende Schicht in zumindest eine der Reflexionsrichtungen Licht aus dem nicht sichtbaren Spektralbereich reflektieren.

10. Sicherheitselement (60) nach wenigstens einem der Ansprüche 1 bis 9, **dadurch gekennzeichnet, dass** die erste und zweite und gegebenenfalls die dritte Reflexionsrichtung, bezogen auf eine Flächennormale auf die lichtpolarisierenden Schichten, durch einen Polwinkel von 20° oder mehr getrennt sind.

11. Sicherheitselement (60) nach wenigstens einem der Ansprüche 1 bis 10, **dadurch gekennzeichnet, dass** die erste und zweite Reflexionsrichtung, bezogen auf eine Flächennormale auf die lichtpolarisierenden Schichten, durch einen Polwinkel von 40° oder mehr getrennt sind.

12. Sicherheitselement (60) nach wenigstens einem der Ansprüche 1 bis 11, **dadurch gekennzeichnet, dass** die erste (64) und/oder die zweite (66) lichtpolarisierende Schicht und/oder gegebenenfalls die erste und/oder zweite Teilschicht der zweiten lichtpolarisierenden Schicht in Form von Zeichen und/oder Mustern vorliegt.

13. Sicherheitselement (60) nach wenigstens einem der Ansprüche 1 bis 12, **dadurch gekennzeichnet, dass** weitere lichtpolarisierende Schichten aus nematischem oder cholesterischem flüssigkristallinem Material vorgesehen sind.

14. Sicherheitselement (60) nach wenigstens einem der Ansprüche 1 bis 13, **dadurch gekennzeichnet, dass** zumindest eine der lichtpolarisierenden Schichten (64, 66) aus cholesterischem flüssigkristallinem Material und/oder gegebenenfalls zumindest eine Schicht aus nematischem flüssigkristallinem Material in Form von Pigmenten vorliegt, welche in eine Bindemittelmatrix eingebettet sind.

15. Sicherheitselement (60) nach Anspruch 14, **dadurch gekennzeichnet, dass** die erste (64) und zweite (66) lichtpolarisierende Schicht, die Licht gegenläufiger zirkularer Polarisation reflektieren, aus cholesterischem flüssigkristallinem Material gebildet sind und in Form von Pigmenten vorliegen, wobei eine Mischung gleicher Anteile von Pigmenten der ersten (64) und zweiten (66) lichtpolarisierenden Schicht in eine Bindemittelmatrix eingebettet sind, so dass die erste (64) und zweite (66) lichtpolarisierende Schicht als eine Schicht aufgebracht werden können.

16. Sicherheitselement (60) nach wenigstens einem der Ansprüche 1 bis 15, **dadurch gekennzeichnet, dass** die semitransparente Filterschicht (62) Licht zwischen dem ersten und zweiten und gegebenenfalls dem dritten Wellenlängenbereich transmittiert und sichtbares Licht außerhalb dieser Wellenlängenbereiche absorbiert.

17. Sicherheitselement (60) nach wenigstens einem der Ansprüche 1 bis 15, **dadurch gekennzeichnet, dass** die semitransparente Filterschicht (62) nur Licht des ersten und/oder zweiten und/oder dritten Wellenlängenbereichs transmittiert und sichtbares Licht außerhalb des ersten und/ oder zweiten und/oder dritten Wellenlängenbereichs absorbiert.

18. Sicherheitselement (60) nach wenigstens einem der Ansprüche 1 bis 17, **dadurch gekennzeichnet, dass** die semitransparente Filterschicht (62) durch eine mit einem oder mehreren Farbstoffen eingefärbte Lackschicht oder Folie gebildet ist.

19. Sicherheitselement (60) nach wenigstens einem der Ansprüche 1 bis 18, **dadurch gekennzeichnet, dass** die semitransparente Filterschicht (62) in Form von Zeichen und/oder Mustern vorliegt.

20. Sicherheitselement (60) nach wenigstens einem der Ansprüche 1 bis 19, **dadurch gekennzeichnet, dass** die lichtpolarisierenden Schichten (64, 66) und gegebenenfalls die semitransparente Filterschicht (62) auf einem Substrat vorliegen, wobei das Substrat vorzugsweise aus Papier oder Kunststoff gebildet ist.

21. Sicherheitselement (60) nach wenigstens einem der Ansprüche 1 bis 20, **dadurch gekennzeichnet, dass** zwischen benachbarten lichtpolarisierenden Schichten (64, 66) und/ oder einer lichtpolarisierenden Schicht (64, 66) und der semitransparenten Filterschicht (62) zur Ausrichtung von flüssigkristallinen Schichten bestimmte Alignmentschichten und/oder Klebeschichten vorliegen.

22. Sicherheitselement (60) nach wenigstens einem der Ansprüche 1 bis 21, **dadurch gekennzeichnet, dass** das Sicherheitselement (60) ein Etikett oder ein Transferelement bildet.

23. Verfahren zum Herstellen eines Sicherheitselements (60) nach wenigstens einem der Ansprüche 1 bis 22, bei dem auf einer semitransparenten Filterschicht (62) übereinander eine erste lichtpolarisierende Schicht (64) aus einem cholesterischen flüssigkristallinen Material und eine zweite lichtpolarisierende Schicht (66), die zumindest eine (Teil-)Schicht aus einem cholesterischen flüssigkristallinen Material enthält, angeordnet werden.

24. Verfahren nach Anspruch 23, **dadurch gekennzeichnet, dass** eine oder mehrere der Flüssigkristallschichten (64, 66) auf eine Trägerfolie aufgebracht, insbesondere aufgedruckt werden.

25. Verfahren nach Anspruch 24, **dadurch gekennzeichnet, dass** die Flüssigkristallschichten (64, 66) nach dem Aufbringen auf die Trägerfolie auf Eignung zur Weiterverarbeitung geprüft werden.

26. Verfahren nach Anspruch 23 oder 24, **dadurch gekennzeichnet, dass** zwei oder mehr Flüssigkristallschichten (64, 66) übereinander auf derselben Trägerfolie aufgebracht werden.

27. Verfahren nach wenigstens einem der Ansprüche 23 bis 26, **dadurch gekennzeichnet, dass** die auf einer Trägerfolie vorliegenden Flüssigkristallschichten (64, 66) auf die semitransparente Filterschicht (62) oder eine weitere Flüssigkristallschicht auflaminiert werden.

28. Verfahren nach Anspruch 27, **dadurch gekennzeichnet, dass** die Trägerfolie nach dem Auflaminieren entfernt wird, insbesondere über Trennschichten oder durch Verwendung eines Laminierklebstoffes, dessen Haftung zur Trägerfolie geringer ist als seine Haftung zur Flüssigkristallschicht, oder über eine Hilfsschicht, die auf der Flüssigkristallschicht vollflächig aufgebracht ist und deren Haftung zur Trägerfolie geringer ist als ihre Haftung zur Flüssigkristallschicht.

29. Verfahren nach Anspruch 28, **dadurch gekennzeichnet, dass** die Hilfsschicht durch eine UV-Lackschicht gebildet wird.

30. Verfahren nach wenigstens einem der Ansprüche 23 bis 29, **dadurch gekennzeichnet, dass** die cholesterischen Flüssigkristallschichten (64, 66) durch Kombination eines nematischen Flüssigkristallsystems mit einem Verdriller gebildet werden.

31. Verfahren nach Anspruch 30, **dadurch gekennzeichnet, dass** eine erste und eine zweite, Licht gegenläufiger zirkularer Polarisationsrichtung reflektierende, cholesterische Flüssigkristallschicht (64, 66) durch Kombination eines nematischen Flüssigkristallsystems mit aufeinander abgestimmten ersten und zweiten Verdrillern gebildet werden, so dass sich die Flüssigkristalle der ersten und zweiten Schicht in zueinander spiegelbildlichen Helixstrukturen anordnen.

32. Verfahren nach wenigstens einem der Ansprüche 23 bis 30, **dadurch gekennzeichnet, dass** die λ/2-Teilschicht der zweiten lichtpolarisierenden Schicht aus nematischem flüssigkristallinem Material gebildet wird.

33. Sicherheitsanordnung für Sicherheitspapiere, Wertdokumente und dergleichen mit
- einem Sicherheitselement (60) nach wenigstens einem der Ansprüche 1 bis 22 oder einem nach wenigstens einem der Ansprüche 23 bis 32 herstellbaren Sicherheitselement (60), und
- einem separaten Darstellungselement, das in Zusammenwirkung mit dem Sicherheitselement (60) einen Farbkippeffekt und/oder einen Polarisationseffekt für den Betrachter erkennbar macht.

34. Sicherheitsanordnung nach Anspruch 33, **dadurch gekennzeichnet, dass** das Darstellungselement einen dunklen, vorzugsweise schwarzen Untergrund umfasst.

35. Sicherheitsanordnung nach Anspruch 34, **dadurch gekennzeichnet, dass** der Untergrund in Form von Zeichen und/ oder Mustern vorliegt.

36. Sicherheitsanordnung nach Anspruch 33, 34 oder 35, **dadurch gekennzeichnet, dass** das Darstellungselement ferner einen Linear- oder Zirkularpolarisator umfasst.

37. Wertdokument, wie Banknote, Scheck, Urkunde, Ausweiskarte oder dergleichen, mit einem Sicherheitselement (60) nach wenigstens einem der Ansprüche 1 bis 22 oder einem nach wenigstens einem der Ansprüche 23 bis 32 herstellbaren Sicherheitselement (60).

38. Wertdokument, wie Banknote, Scheck, Urkunde, Ausweiskarte oder dergleichen, mit einer Sicherheitsanordnung nach wenigstens einem der Ansprüche 33 bis 36.

39. Wertdokument nach Anspruch 37 oder 38, **dadurch gekennzeichnet, dass** das Sicherheitselement (60) in einem Fensterbereich des Wertdokuments angeordnet ist.

40. Wertdokument nach Anspruch 38, **dadurch gekennzeichnet, dass** das Wertdokument flexibel ist, so dass das Sicherheitselement (60) und das Darstellungselement durch Biegen oder Falten des Wertdokuments zur Selbstauthentifizierung übereinander legbar sind.

41. Verfahren zur Echtheitsprüfung eines Sicherheitselements (60) nach einem der Ansprüche 1 bis 32, einer Sicherheitsanordnung nach einem der Ansprüche 33 bis 36 oder eines Wertdokuments nach einem der Ansprüche 37 bis 40, **dadurch gekennzeichnet, dass** im Durchlicht geprüft wird, ob ein vorbestimmter Farbkippeffekt vorliegt, und die Echtheit des geprüften Elements auf Grundlage des Prüfungsergebnisses beurteilt wird.

42. Verfahren zur Echtheitsprüfung eines Sicherheitselements (60) nach einem der Ansprüche 1 bis 32, einer Sicherheitsanordnung nach einem der Ansprüche 33 bis 36 oder eines Wertdokuments nach einem der Ansprüche 37 bis 40, **dadurch gekennzeichnet, dass** das Sicherheitselement (60) auf einen gegebenenfalls durch das Darstellungselement gebildeten, dunklen Untergrund gelegt wird, mithilfe eines Zirkularpolarisators eine in dem Sicherheitselement (60) codierte Information gelesen wird und die Echtheit des geprüften Elements auf Grundlage des Leseergebnisses beurteilt wird.

43. Verwendung eines Sicherheitselements (60) nach einem der Ansprüche 1 bis 22 oder eines nach einem der Ansprüche 23 bis 32 herstellbaren Sicherheitselements (60) oder einer Sicherheitsanordnung nach einem der Ansprüche 33 bis 36 zur Absicherung von Wertgegenständen, wie Markenartikeln oder Wertdokumenten.

## Claims

1. A security element (60) for securing value documents, having
- a first light polarizing layer (64) that is present at least in some areas and comprises a cholesteric liquid crystal material, that selectively reflects light having a predetermined circular polarization, and that selectively reflects light of a first wavelength range in a first reflection direction and light of a second wavelength range in a second, different reflection direction,
- a second light polarizing layer (66) that is present at least in some areas and that selectively reflects light having the opposite circular polarization to the predetermined circular polarization, and that selectively reflects light of the first and second wavelength range in the first and second reflection direction, respectively,
**characterized in that**
- a semi-transparent filter layer (62) on which the first and second light polarizing layer (64, 66) are stacked, the filter layer (62) at least partially absorbing light from the visible spectral range and transmitting light from the first and/ or second wavelength range.

2. The security element (60) according to claim 1, **characterized in that** the second light polarizing layer (66) is formed from a cholesteric liquid crystal material, and selectively reflects light having the opposite circular polarization to the predetermined circular polarization.

3. The security element (60) according to claim 1, **characterized in that** the second light polarizing layer (66) is formed from two sub-layers, a first sub-layer being formed from a cholesteric liquid crystal material and selectively reflecting light having the predetermined circular polarization, and a second sub-layer disposed between the first sub-layer and the first light polarizing layer forming a λ/2 layer.

4. The security element (60) according to claim 3, **characterized in that** the λ/2 layer is formed from nematic liquid crystal material.

5. The security element (60) according to claim 3 or 4, **characterized in that** the λ/2 layer is formed from multiple sub-layers that are stacked and, in some areas, twisted toward one another in the layer plane.

6. The security element (60) according to claim 5, **characterized in that** the multiple sub-layers are formed by two λ/4 layers.

7. The security element (60) according to at least one of claims 1 to 6, **characterized in that** the first (64) and second (66) light polarizing layer selectively reflect light of a third wavelength range in a third reflection direction, and the semi-transparent filter layer (62) at least partially absorbs light from the visible spectral range and transmits light from the first and/or second and/ or third wavelength range.

8. The security element (60) according to at least one of claims 1 to 7, **characterized in that** the first (64) and second (66) light polarizing layer reflect light from the visible spectral range in all reflection directions.

9. The security element (60) according to at least one of claims 1 to 7, **characterized in that** the first (64) and second (66) light polarizing layer reflect light from the non-visible spectral range in at least one of the reflection directions.

10. The security element (60) according to at least one of claims 1 to 9, **characterized in that** the first and second and, if applicable, the third reflection direction are separated by a polar angle of 20° or more with respect to a surface normal to the light polarizing layers.

11. The security element (60) according to at least one of claims 1 to 10, **characterized in that** the first and second reflection direction are separated by a polar angle of 40° or more with respect to a surface normal to the light polarizing layers.

12. The security element (60) according to at least one of claims 1 to 11, **characterized in that** the first (64) and/or the second (66) light-polarizing layer and/ or, if applicable, the first and/ or second sub-layer of the second light-polarizing layer is present in the form of characters and/or patterns.

13. The security element (60) according to at least one of claims 1 to 12, **characterized in that** further light-polarizing layers comprising nematic or cholesteric liquid crystal material are provided.

14. The security element (60) according to at least one of claims 1 to 13, **characterized in that** at least one of the light-polarizing layers (64, 66) comprising cholesteric liquid crystal material and/ or, if applicable, at least one layer comprising nematic liquid crystal material is present in the form of pigments that are embedded in a binder matrix.

15. The security element (60) according to claim 14, **characterized in that** the first (64) and second (66) light-polarizing layer, which reflect light of opposing circular polarization, are formed from cholesteric liquid crystal material and are present in the form of pigments, a mixture of equal parts of pigments of the first (64) and second (66) light-polarizing layer being embedded in a binder matrix such that the first (64) and second (66) light-polarizing layer can be applied as one layer.

16. The security element (60) according to at least one of claims 1 to 15, **characterized in that** the semi-transparent filter layer (62) transmits light between the first and second and, if applicable, the third wavelength range and absorbs visible light outside of these wavelength ranges.

17. The security element (60) according to at least one of claims 1 to 15, **characterized in that** the semi-transparent filter layer (62) transmits only light of the first and/ or second and/ or third wavelength range and absorbs visible light outside of the first and/ or second and/ or third wavelength range.

18. The security element (60) according to at least one of claims 1 to 17, **characterized in that** the semi-transparent filter layer (62) is formed by a lacquer layer or foil colored with one or more dyes.

19. The security element (60) according to at least one of claims 1 to 18, **characterized in that** the semi-transparent filter layer (62) is present in the form of characters and/or patterns.

20. The security element (60) according to at least one of claims 1 to 19, **characterized in that** the light-polarizing layers and, if applicable, the semi-transparent filter layer (62) are present on a substrate, the substrate preferably being formed from paper or plastic.

21. The security element (60) according to at least one of claims 1 to 20, **characterized in that** alignment layers and/ or adhesive layers intended to align liquid crystal layers are present between adjacent light-polarizing layers (64, 66) and/ or a light-polarizing layer (64, 66) and the semi-transparent filter layer (62).

22. The security element (60) according to at least one of claims 1 to 21, **characterized in that** the security element (60) forms a label or a transfer element.

23. A method for manufacturing a security element (60) according to at least one of claims 1 to 22, in which a first light-polarizing layer (64) comprising a cholesteric liquid crystal material and a second light-polarizing layer (66) that includes at least one (sub-)layer comprising a cholesteric liquid crystal material are stacked on a semi-transparent filter layer (62).

24. The method according to claim 23, **characterized in that** one or more of the liquid crystal layers (64, 66) are applied to, especially imprinted on, a substrate foil.

25. The method according to claim 24, **characterized in that**, following the application to the substrate foil, the liquid crystal layers (64, 66) are checked for suitability for further processing.

26. The method according to claim 23 or 24, **characterized in that** two or more liquid crystal layers (64, 66) are applied stacked on the same substrate foil.

27. The method according to at least one of claims 23 to 26, **characterized in that** the liquid crystal layers (64, 66) present on a substrate foil are laminated onto the semi-transparent filter layer (62) or a further liquid crystal layer.

28. The method according to claim 27, **characterized in that**, following lamination, the substrate foil is removed, especially via separation layers or by using a laminating adhesive whose adhesion to the substrate foil is less than its adhesion to the liquid crystal layer, or via an auxiliary layer that is applied to the entire surface of the liquid crystal layer and whose adhesion to the substrate foil is less than its adhesion to the liquid crystal layer.

29. The method according to claim 28, **characterized in that** the auxiliary layer is formed by a UV lacquer layer.

30. The method according to at least one of claims 23 to 29, **characterized in that** the cholesteric liquid crystal layers (64, 66) are formed by combining a nematic liquid crystal system with a twister.

31. The method according to claim 30, **characterized in that** a first and a second cholesteric liquid crystal layer (64, 66) reflecting light of opposite direction of circular polarization are formed by combining a nematic liquid crystal system with coordinated first and second twisters such that the liquid crystals of the first and second layer arrange themselves into mirror-image helix structures.

32. The method according to at least one of claims 23 to 30, **characterized in that** the λ/2 sub-layer of the second light-polarizing layer is formed from nematic liquid crystal material.

33. A security arrangement for security papers, value documents and the like, having
- a security element (60) according to at least one of claims 1 to 22 or a security element (60) manufacturable according to at least one of claims 23 to 32, and
- a separate display element that, in coaction with the security element (60), makes a color shift effect and/or a polarization effect perceptible for the viewer.

34. The security arrangement according to claim 33, **characterized in that** the display element comprises a dark, preferably black background.

35. The security arrangement according to claim 34, **characterized in that** the background is present in the form of characters and/ or patterns.

36. The security arrangement according to claim 33, 34 or 35, **characterized in that** the display element further comprises a linear or circular polarizer.

37. A value document, such as a banknote, check, certificate, identification card or the like, having a security element (60) according to at least one of claims 1 to 22 or a security element (60) manufacturable according to at least one of claims 23 to 32.

38. A value document, such as a banknote, check, certificate, identification card or the like, having a security arrangement according to at least one of claims 33 to 36.

39. The value document according to claim 37 or 38, **characterized in that** the security element (60) is disposed in a window area of the value document.

40. The value document according to claim 38, **characterized in that** the value document is flexible such that the security element (60) and the display element are layable one on top of another by bending or folding the value document for self-authentication.

41. A method for checking the authenticity of a security element (60) according to one of claims 1 to 32, of a security arrangement according to one of claims 33 to 36 or of a value document according to one of claims 37 to 40, **characterized in that** it is checked in transmitted light whether a predetermined color shift effect is present, and the authenticity of the checked element is assessed on the basis of the check result.

42. A method for checking the authenticity of a security element (60) according to one of claims 1 to 32, of a security arrangement according to one of claims 33 to 36 or of a value document according to one of claims 37 to 40, **characterized in that** the security element (60) is laid on a dark background, formed, if applicable, by the display element, a piece of information encoded in the security element (60) is read with the aid of a circular polarizer, and the authenticity of the checked element is assessed on the basis of the read result.

43. A use of a security element (60) according to one of claims 1 to 22 or of a security element (60) manufacturable according to one of claims 23 to 32 or of a security arrangement according to one of claims 33 to 36 for securing valuable articles, such as branded articles or value documents.

## Revendications

1. Elément de sécurité (60) pour la sécurisation de documents de valeur, comprenant :
- une première couche (64) polarisant la lumière, se présentant au moins par domaines, constituée d'un matériau cristal liquide cholestérique, qui réfléchit sélectivement la lumière avec une polarisation circulaire prédéterminée, et qui réfléchit sélectivement dans une première direction de réflexion la lumière correspondant à un premier domaine de longueurs d'onde et dans une deuxième direction de réflexion, différente, la lumière correspondant à un deuxième domaine de longueurs d'onde,
- une deuxième couche (66) polarisant la lumière, se présentant au moins par domaines, qui réfléchit sélectivement la lumière avec une polarisation circulaire inverse de la polarisation circulaire prédéterminée, et qui réfléchit sélectivement, respectivement dans la première et dans la deuxième directions de réflexion, la lumière correspondant au premier et au deuxième domaines de longueurs d'onde,
**caractérisé en ce que**
- une couche filtrante semi-transparente (62), sur laquelle sont disposées l'une au-dessus de l'autre la première et la deuxième couches (64, 66) polarisant la lumière, la couche filtrante (62) absorbant au moins partiellement la lumière correspondant au domaine visible du spectre, et transmettant la lumière correspondant au premier et/ou au deuxième domaines de longueurs d'onde.

2. Elément de sécurité (60) selon la revendication 1 **caractérisé en ce que** la deuxième couche (66) polarisant la lumière est formée d'un matériau cristal liquide cholestérique, et réfléchit sélectivement la lumière avec une polarisation circulaire inverse de la polarisation circulaire prédéterminée.

3. Elément de sécurité (60) selon la revendication 1 **caractérisé en ce que** la deuxième couche (66) polarisant la lumière est formée de deux couches partielles, une première couche partielle étant formée d'un matériau cristal liquide cholestérique et réfléchissant sélectivement la lumière avec une polarisation circulaire prédéterminée, une deuxième couche partielle, disposée entre la première couche partielle et la première couche polarisant la lumière, formant une couche λ/2.

4. Elément de sécurité (60) selon la revendication 3 **caractérisé en ce que** la couche λ/2 est formée d'un matériau cristal liquide nématique.

5. Elément de sécurité (60) selon la revendication 3 ou 4 **caractérisé en ce que** la couche λ/2 est formée de plusieurs couches partielles disposées les unes au-dessus des autres, et ayant subi une torsion par domaines les unes par rapport aux autres dans le plan de la couche.

6. Elément de sécurité (60) selon la revendication 5 **caractérisé en ce que** les plusieurs couches partielles sont formées de deux couches λ/4.

7. Elément de sécurité (60) selon au moins l'une des revendications 1 à 6 **caractérisé en ce que** la première couche (64) et la deuxième couche (66) polarisant la lumière réfléchissent sélectivement dans une troisième direction de réflexion la lumière correspondant à un troisième domaine de longueurs d'onde, et la couche filtrante semi-transparente (62) absorbe au moins partiellement la lumière visible du spectre, et/ou transmet la lumière correspondant au premier et/ou au deuxième et/ou au troisième domaines de longueurs d'onde.

8. Elément de sécurité (60) selon au moins l'une des revendications 1 à 7 **caractérisé en ce que** la première couche (64) et la deuxième couche (66) polarisant la lumière réfléchissent dans toutes les directions de réflexion la lumière correspondant au domaine visible du spectre.

9. Elément de sécurité (60) selon au moins l'une des revendications 1 à 7 **caractérisé en ce que** la première couche (64) et la deuxième couche (66) polarisant la lumière réfléchissent au moins dans l'une des directions de réflexion la lumière correspondant au domaine non visible du spectre.

10. Elément de sécurité (60) selon au moins l'une des revendications 1 à 9 **caractérisé en ce que** la première et la deuxième directions de réflexion, et éventuellement la troisième direction de réflexion, sont séparées par un angle polaire, par rapport à une normale à la surface des couches polarisant la lumière, de 20° ou plus.

11. Elément de sécurité (60) selon au moins l'une des revendications 1 à 10 **caractérisé en ce que** la première et la deuxième directions de réflexion sont séparées d'un angle polaire, par rapport à une normale à la surface des couches polarisant la lumière, de 40° ou plus.

12. Elément de sécurité (60) selon au moins l'une des revendications 1 à 11 **caractérisé en ce que** la première couche (64) et/ou la deuxième couche (66) polarisant la lumière et/ou éventuellement la première et/ou la deuxième couches partielles de la deuxième couche polarisant la lumière, se présentent sous forme de signes et/ou de motifs.

13. Elément de sécurité (60) selon au moins l'une des revendications 1 à 12 **caractérisé en ce que** sont prévues des couches supplémentaires polarisant la lumière, en un matériau cristal liquide nématique ou cholestérique.

14. Elément de sécurité (60) selon au moins l'une des revendications 1 à 13 **caractérisé en ce qu'**au moins l'une des couches (64, 66) polarisant la lumière en un matériau cristal liquide cholestérique et/ou éventuellement au moins une couche en un matériau cristal liquide nématique se présentent sous forme de pigments qui sont incorporés dans une matrice liante.

15. Elément de sécurité (60) selon la revendication 14 **caractérisé en ce que** la première couche (64) et la deuxième couche (66) polarisant la lumière, qui réfléchissent la lumière avec une polarisation circulaire inverse, sont formées d'un matériau cristal liquide cholestérique et se présentent sous forme de pigments, un mélange en proportions égales de pigments de la première couche (64) et de la deuxième couche (66) polarisant la lumière étant incorporé dans une matrice liante de telle sorte que la première couche (64) et la deuxième couche (66) polarisant la lumière puissent être appliquées sous forme d'une couche.

16. Elément de sécurité (60) selon au moins l'une des revendications 1 à 15 **caractérisé en ce que** la couche filtrante semi-transparente (62) transmet la lumière correspondant au domaine de longueurs d'onde compris entre le premier et le deuxième domaines de longueurs d'onde et éventuellement le troisième, et absorbe la lumière visible à l'extérieur de ces domaines de longueurs d'onde.

17. Elément de sécurité (60) selon au moins l'une des revendications 1 à 15 **caractérisé en ce que** la couche filtrante semi-transparente (62) ne transmet que la lumière correspondant au premier et/ou au deuxième et/ou au troisième domaines de longueurs d'onde, et absorbe la lumière visible à l'extérieur du premier et/ou du deuxième et/ou du troisième domaines de longueurs d'onde.

18. Elément de sécurité (60) selon au moins l'une des revendications 1 à 17 **caractérisé en ce que** la couche filtrante semi-transparente (62) est formée d'une couche de vernis ou d'une feuille, colorée dans la masse à l'aide d'un ou plusieurs colorants.

19. Elément de sécurité (60) selon au moins l'une des revendications 1 à 18 **caractérisé en ce que** la couche filtrante semi-transparente (62) se présente sous forme de signes et/ou de motifs.

20. Elément de sécurité (60) selon au moins l'une des revendications 1 à 19 **caractérisé en ce que** les couches (64, 66) polarisant la lumière et éventuellement la couche filtrante semi-transparente (62) se présentent sur un substrat, le substrat étant de préférence formé de papier ou d'un matériau plastique.

21. Elément de sécurité (60) selon au moins l'une des revendications 1 à 20 **caractérisé en ce que** certaines couches d'alignement et/ou couches adhésives, destinées à l'orientation de couches de cristaux liquides, sont présentes entre des couches (64, 66) voisines polarisant la lumière et/ou une couche (64, 66) polarisant la lumière et la couche filtrante semi-transparente (62).

22. Elément de sécurité (60) selon au moins l'une des revendications 1 à 21 **caractérisé en ce que** l'élément de sécurité (60) forme une étiquette ou un élément par transfert.

23. Procédé de fabrication d'un élément de sécurité (60) selon au moins l'une des revendications 1 à 22, dans lequel, sur une couche filtrante semi-transparente (62), on dispose l'une au-dessus de l'autre une première couche (64) polarisant la lumière en un matériau cristal liquide cholestérique et une deuxième couche (66) polarisant la lumière, qui contient au moins une couche (partielle) en un matériau cristal liquide cholestérique.

24. Procédé selon la revendication 23 **caractérisé en ce qu'**une ou plusieurs des couches de cristaux liquides (64, 66) sont appliquées, en particulier par impression, sur une feuille support.

25. Procédé selon la revendication 24 **caractérisé en ce que** les couches de cristaux liquides (64, 66) sont, après application sur la feuille support, soumises à des essais pour vérifier qu'elles conviennent à une post-transformation.

26. Procédé selon la revendication 23 ou 24 **caractérisé en ce que** deux couches de cristaux liquides (64, 66) ou plus sont, les unes au-dessus des autres, appliquées sur la même feuille support.

27. Procédé selon au moins l'une des revendications 23 à 26 **caractérisé en ce que** les couches de cristaux liquides (64, 66) présentes sur une feuille support sont contrecollées sur la couche filtrante semi-transparente (62) ou sur une autre couche de cristaux liquides.

28. Procédé selon la revendication 27 **caractérisé en ce que** la feuille support est enlevée après contrecollage, en particulier par l'intermédiaire d'une couche de séparation ou par utilisation d'un adhésif de contrecollage, dont l'adhérence à la feuille support est inférieure à son adhérence à la couche de cristaux liquides, ou par l'intermédiaire d'une couche auxiliaire, qui est appliquée en pleine surface sur la couche de cristaux liquides et dont l'adhérence à la feuille support est inférieure à son adhérence à la couche de cristaux liquides.

29. Procédé selon la revendication 28 **caractérisé en ce que** la couche auxiliaire est formée d'une couche de vernis durcissant aux UV.

30. Procédé selon au moins l'une des revendications 23 à 29 **caractérisé en ce que** les couches de cristaux liquides cholestériques (64, 66) sont formées par combinaison d'un système de cristaux liquides nématiques avec un agent d'organisation en hélice.

31. Procédé selon la revendication 30 **caractérisé en ce qu'**une première et une deuxième couches de cristaux liquides cholestériques (64, 66), réfléchissant la lumière ayant une direction de polarisation circulaire inverse, sont formées par combinaison d'un système de cristaux liquides nématiques avec un premier et un deuxième agents d'organisation en hélice, adaptés l'un à l'autre, de telle sorte que les cristaux liquides de la première et de la deuxième couches s'organisent en des structures en hélice formant image spéculaire l'une de l'autre.

32. Procédé selon au moins l'une des revendications 23 à 30 **caractérisé en ce que** la couche partielle λ/2 de la deuxième couche polarisant la lumière est formée d'un matériau cristal liquide nématique.

33. Structure de sécurité pour papiers de sécurité, documents de valeur et analogues, comportant
- un premier élément de sécurité (60) selon au moins l'une des revendications 1 à 22 ou un élément de sécurité (60) pouvant être fabriqué selon au moins l'une des revendications 23 à 32, et
- un élément de représentation distinct, qui, en coopération avec l'élément de sécurité (60), rend reconnaissable par l'observateur un effet d'inclinaison chromatique et/ou un effet de polarisation.

34. Structure de sécurité selon la revendication 33 **caractérisée en ce que** l'élément de représentation comprend un fond foncé, de préférence noir.

35. Structure de sécurité selon la revendication 34 **caractérisée en ce que** le fond se présente sous forme de signes et/ou de motifs.

36. Structure de sécurité selon la revendication 33,34 ou 35 **caractérisée en ce que** l'élément de représentation comprend en outre un polariseur linéaire ou circulaire.

37. Document de valeur, tel qu'un billet de banque, un chèque, un certificat, une carte d'identité ou analogues, comportant un élément de sécurité (60) selon au moins l'une des revendications 1 à 22 ou un élément de sécurité (60) pouvant être fabriqué selon au moins l'une des revendications 23 à 32.

38. Document de valeur, tel qu'un billet de banque, un chèque, un certificat, une carte d'identité ou analogues, comportant une structure de sécurité selon au moins l'une des revendications 33 à 36.

39. Document de valeur selon la revendication 37 ou 38 **caractérisé en ce que** l'élément de sécurité (60) est disposé dans un domaine formant fenêtre du document de valeur.

40. Document de valeur selon la revendication 38 **caractérisé en ce que** le document de valeur est flexible de telle sorte que l'élément de sécurité (60) et l'élément de représentation puissent, par pliage ou courbure du document de valeur, être disposés l'un au-dessus de l'autre pour auto-authentification.

41. Procédé de contrôle de l'authenticité d'un élément de sécurité (60) selon l'une des revendications 1 à 32, d'une structure de sécurité selon l'une des revendications 33 à 36 ou d'un document de valeur selon l'une des revendications 37 à 40 **caractérisé en ce qu'**on contrôle, en lumière transmise, si un effet d'inclinaison chromatique prédéterminé est présent, et l'authenticité de l'élément contrôlé est évaluée sur la base du résultat du contrôle.

42. Procédé de contrôle de l'authenticité d'un élément de sécurité (60) selon l'une des revendications 1 à 32, d'une structure de sécurité selon l'une des revendications 33 à 36 ou d'un document de valeur selon l'une des revendications 37 à 40 **caractérisé en ce qu'**on pose l'élément de sécurité (60) sur un fond foncé, éventuellement formé par l'élément de représentation, on utilise un polariseur circulaire pour lire une information codée dans l'élément de sécurité (60), et on évalue l'authenticité de l'élément contrôlé sur la base du résultat de la lecture.

43. Utilisation d'un élément de sécurité (60) selon l'une des revendications 1 à 22, ou d'un élément de sécurité (60) pouvant être fabriqué selon l'une des revendications 23 à 32 ou d'une structure de sécurité selon l'une des revendications 33 à 36 pour sécuriser des objets de valeur tels que des articles de marque ou des documents de valeur.
